# EUROPEAN PATENT APPLICATION

(11) **EP 3 122 083 A1**
(43) Date of publication of application: **25.01.2017**
(21) Application number: 15002161.6
(22) Date of filing: 21.07.2015
(51) Int. Cl.: H04W 12/04, H04W 4/00

(54) **METHOD FOR PROVIDING A SUBSCRIPTION TO A SECURE ELEMENT**

(71) Applicant: Giesecke & Devrient GmbH, 81677 München (DE)
(72) Inventor: Juréhn, Felix, 126 39 Hägersten (SE)

(57) **Abstract**

The present invention relates to a method for providing a subscription to a secure element (12) of a mobile equipment (10). The method comprises detecting a different mobile network (20) establishing a wireless connection (36) between the mobile equipment (10) and a subscription management server (33), informing the subscription management server (32) of the different mobile network (20), establishing a second connection (38) between the subscription management server (32) and the mobile network operator (30), and, if the detected different network (20) requires a different subscription, providing the different subscription to a download address (33), and downloading the subscription to the mobile equipment (10).

## Description

### Field of the Invention

The invention relates to mobile communications in general and in particular to methods and devices for over the air management of mobile equipment, in particular a mobile device comprising a secure (identification) element, preferably a subscriber identity module, in a mobile communications system.

### Background of the Invention

The Global System for Mobile Communications (GSM) is the world's most popular standard for mobile communications systems. The technical features of GSM are defined by a large number of interrelated and mutually dependent specifications published by the ETSI standardization organization. Generally, for communicating with a mobile phone via a public land mobile network (PLMN) implemented according to the GSM specifications requires a secure identification element called subscriber identity module (SIM), usually in the form of a smart card. Alternatively, the SIM may be permanently embedded in a device. Such a SIM is also referred to as eUICC (embedded universal integrated circuit card). The SIM contains subscription data for authenticating and identifying the subscriber of the PLMN, including in particular the International Mobile Security Identity (IMSI) and the authentication key Ki. This network-specific information is generally stored on the SIM by the PLMN operator or the SIM manufacturer during a SIM personalization process prior to providing the subscriber with his SIM.

According to the GSM standard the IMSI stored on the SIM is a number with up to 15 digits that allows for an internationally unique identification of the subscriber. The first 3 digits of the IMSI number represent the Mobile Country Code (MCC), the next 2 or 3 digits represent the Mobile Network Code (MNC), and the remaining digits (up to 10) represent the mobile station identification number (MSIN) assigned by the PLMN operator. The IMSI number allows the operator of the PLMN to identify a subscriber and to provide him with those services the subscriber has paid for.

The authentication key Ki is a 128-bit data element for authenticating the SIM contained in a mobile phone with respect to the PLMN. The authentication key Ki is paired with a specific IMSI number during the SIM personalization process. For security reasons the authentication key Ki is only stored on the SIM and on a database of the PLMN called authentication center (AUC).

The GSM authentication procedure, described in the following, is an implementation of a general challenge-response authentication procedure, in which one party, i.e. the PLMN, presents a challenge and another party, i.e. the mobile phone, must provide a valid response to be authenticated. When a mobile phone starts up, it retrieves the IMSI number from its SIM. The user of the mobile phone generally has to enter a PIN before the SIM will grant access to the IMSI number. The mobile phone sends the IMSI number via the air interface and the base station subsystem (BSS) to the mobile switching center (MSC) of a PLMN. The MSC forwards the IMSI to the home location register (HLR) and requests authentication triplets. When the HLR receives the IMSI number and the request for authentication triplets, it first checks its database to make sure the IMSI number is valid and belongs to the network. Once it has accomplished this, it forwards the IMSI number and request for authentication triplets to the AUC. The AUC uses the IMSI to look up the authentication key Ki associated with that IMSI. The AUC will also generate a 128-bit random number called RAND, which together with the authentication key Ki is fed into the A3 encryption algorithm. The output of the A3 encryption algorithm is a 32-bit number called Signed Response (SRES).
The RAND number and the authentication key Ki are moreover fed into the A8 encryption algorithm. The output is a 64-bit number called Kc. The Kc is the ciphering key that is used in the A5 encryption algorithm to encipher and decipher the data that is being transmitted over the air interface between the mobile phone and the PLMN.

The RAND number, the SRES, and the ciphering key Kc form an authentication triplet that is unique to the IMSI number used for creating this triplet. Once the AUC has generated such an authentication triplet, it forwards it to the HLR, which, in turn, sends it to the requesting MSC. The MSC stores the ciphering key Kc and the SRES but forwards the RAND number as the challenge of the GSM challenge-response authentication procedure to the mobile station and requests authentication.

The authentication key Ki is securely stored on the SIM of the mobile phone. The A3 and A8 encryption algorithms also reside on the SIM. The RAND number received from the MSC via the air interface and the authentication key Ki are fed into the A3 and A8 encryption algorithms to generate another signed response SRES* and the ciphering key Kc, respectively. The mobile phone stores the ciphering key Kc on the SIM and sends the generated signed response SRES* as the response of the GSM challenge-response authentication procedure back to the network. The MSC receives the signed response SRES* generated by the mobile phone and compares it with the signed response SRES generated by the AUC. If they match, the mobile phone (or rather it's SIM) is authenticated.

It is known to manage SIMs or devices equipped with such SIMs over-the-air (OTA) using standardized protocols carried over SMS (short message service) or IP (Internet protocol) communication channels using an already established connection in a mobile communications system.
WO 2010/093312, for instance, describes a method for OTA activation and management of a SIM using an ODA (On Demand Activation) application. The method described in WO 2010/093312 is adapted to activate and manage a SIM after it has authenticated itself relative to the PLMN according to the above described GSM challenge-response authentication procedure.

One particular field of application of SIMs which is expected to grow rapidly within the next couple of years is M2M, i.e. the communication between machines over a mobile communications network without human intervention, also called the Internet of things. In M2M data is automatically transmitted between many different types of machines/devices equipped with a SIM, such as TV systems, set top boxes, vending machines, vehicles, electronic books, automatic cameras, sensor devices, and the like. It is foreseeable that at least for some of these devices it will not be possible or at least very difficult to provide the SIM beforehand with a complete subscription data set, for instance an IMSI number. This is because in some M2M applications the SIM can be a surface mounted device, which has to be embedded within the respective machine during the manufacturing process thereof without the possibility of providing the SIM with complete subscription data beforehand. Moreover, a SIM can be provided permanently (non-removable) in an M2M device or non-removable in a mobile device, such as a mobile phone and/or a tablet PC, such a SIM is known as eUICC (embedded universal integrated circuit card). Consequently, once in the field, these machines require the provision of subscription data over-the-air. On a SIM/eUICC multiple subscriptions can be provided.

Subscription Management is a technology which makes it possible to download new subscriptions to the SIM and switch between them. A Subscription, as already mentioned above, may refer to credentials for accessing wireless telephony systems and may also include additional network related information such as PLMN access list. The Subscription Management can contact the card in multiple ways. The most common is to send a text message (SMS) to the current active subscription that tells the card that it needs to open a https channel to a Subscription Management server.

An additional way of opening a communication with the SIM is to push down the open channel message over a cloud based transport service. This requires a companion application to be present on the device to receive the message. It then uses the information to open and handle the communication between the server and the SIM.

Multiple subscriptions may be present on a secure element of a SIM/eUICC. For instance, a user may have - on the same device - a business subscription, associated with his business phone number (MSISDN), as well as a private subscription, used to communicate with family and friends having a different MSISDN. A further subscription may be provided on the mobile device which is used in roaming mode, i.e. when the mobile device is used in a different country compared to country in which the subscription is normally used. Whenever a secure element that is adapted to switch between active subscriptions on its own is moved to another country, the problem arises that the subscription management server will know that a plurality of subscriptions are on the secure element, but not which subscription is active. Thus, it is difficult for the subscription management server to contact the card using the MSISDN, since a message would have to be sent to every subscription on the card.

Without a reliable way of communicating with the card, it might not be possible to transmit a new/ different subscription to the mobile device or to update files on the card. Hence, the mobile device might face difficulties when entering roaming mode.

Thus, the problem addressed by the present invention is to provide a method that allows providing a mobile device comprising a secure element, such as a SIM and/or an eUICC, over-the-air with subscription and/or instruction data whenever the mobile phone detects a different network in comparison to the previous network.

### Summary of the Invention

This object is achieved according to the present invention by the subject-matter of the independent claims. Preferred embodiments are defined in the dependent claims.

The present invention is based on the basic concept that - when entering into a different network (roaming) - the communication between the subscription management server and the active subscription on the mobile device could carried out more reliable and/or redundant, if the mobile equipment would contact the subscription management server.

In this regard a method for providing a subscription to a secure element of a mobile device comprises detecting a different mobile network (in comparison to the previous mobile network) with the mobile equipment, in particular the network of a different mobile network operator (MNO), establishing a first wireless connection between the mobile equipment, in particular the secure element, and a subscription management server, informing the subscription management server of the different detected network (with the mobile equipment), establishing a second connection between the subscription management server and the mobile network operator, if the detected different network requires a different subscription, providing the different subscription to a download address , and downloading the subscription to the mobile equipment, in particular the secure element, wherein after having established a connection between the mobile equipment, in particular the secure element, and the subscription management server, the mobile equipment, in particular the secure element, continuously polls the download address, if the different subscription is available for download.

By continuously polling the download address, if the different/ new subscription is available for download, it is advantageously possible to find out, if the different/ new subscription is already available or not. Thus, once the mobile equipment has entered into roaming mode, i.e. the mobile equipment has detected a different/ new network, the mobile equipment and/or the secure element of the mobile equipment can actively poll the download address, if the new subscription is already available for download. In particular, if there is a plurality of subscriptions available on the secure element of the mobile equipment, the subscription management server has no reliable way of contacting the card, since the subscription management server may only contact an active subscription. However, since the secure element could be provided with a plurality of subscriptions, the subscription management server does not know which subscription is active.

According to an embodiment of the invention, the different mobile network is a roaming network. Hence, it is advantageously possible, once the mobile equipment enters into "roaming mode" to determine, if the roaming network requires a different subscription and to poll the download address to find out if the roaming/ different subscription is already available for download.

According to yet another embodiment, the first wireless connection between the mobile equipment and the subscription management server employs a mobile network and/or a wifi-network. Thus, even if the mobile equipment does not have a connection to either of the two, it can use the other connection to contact the subscription management server.

Moreover, the download address can be an address associated with the subscription management server. In other words, the download address can be an address associated with the available address space of the subscription management server, which can be contacted by any known means for online communication.

According to another aspect of the invention, the secure element waits for a predetermined amount of time until it starts polling the download address. In particular, the secure element waits for 10ms, 100ms,1s, 4s, 10s, etc. until it starts polling the download address. Hence, it is advantageously possible to give the subscription management server sufficient time to prepare the subscription and create the download address.

Additionally, the secure element may poll the download address for a predetermined amount of times. For instance the secure element may poll for 3, 5,10,15 times. A sufficient time interval in between the subsequent "polls" may be set. Thus, it can be assured that the subscription management server has enough time to prepare the different subscription and/ or that the mobile equipment does not "miss" the different subscription by not repeatedly trying to acquire the new subscription from the download address.

As an alternative, it is possible that - whenever the card contacts the subscription management server for the first time - the subscription management server informs the secure element when to start polling, how long to wait until the start of the polling, how many times it should poll and/or what address should be polled. If the subscription management server does not provide the secure element with this information, default parameters may be used.

The mobile network operator may upload the different subscription to the download address, wherein the subscription management server may provide the download address. Accordingly, the mobile network operator as well as the mobile equipment know whom to contact.

According to another embodiment, a plurality of subscriptions may be available on the mobile equipment, in particular the secure element of the mobile equipment. In addition, the step of downloading may also comprise deleting at least one subscription installed on the secure element. Thus, it is possible to delete an installed subscription, if it is not necessary anymore or if there is not enough memory available on the secure element or if it is obsolete. Hence, an efficient memory management becomes possible.

The different mobile network may be a network, for which a current subscription is not (already) available on the secure element.

### Brief description of the drawings

- Fig. 1: shows an example of a mobile terminal detecting a different network.
- Fig. 2: shows a possible communication between a mobile terminal, a mobile network and a subscription management server, and
- Fig. 3: shows a flow chart of an embodiment of the invention indicating basic steps of a method for providing a subscription to a secure element.

### Description of preferred embodiments of the invention

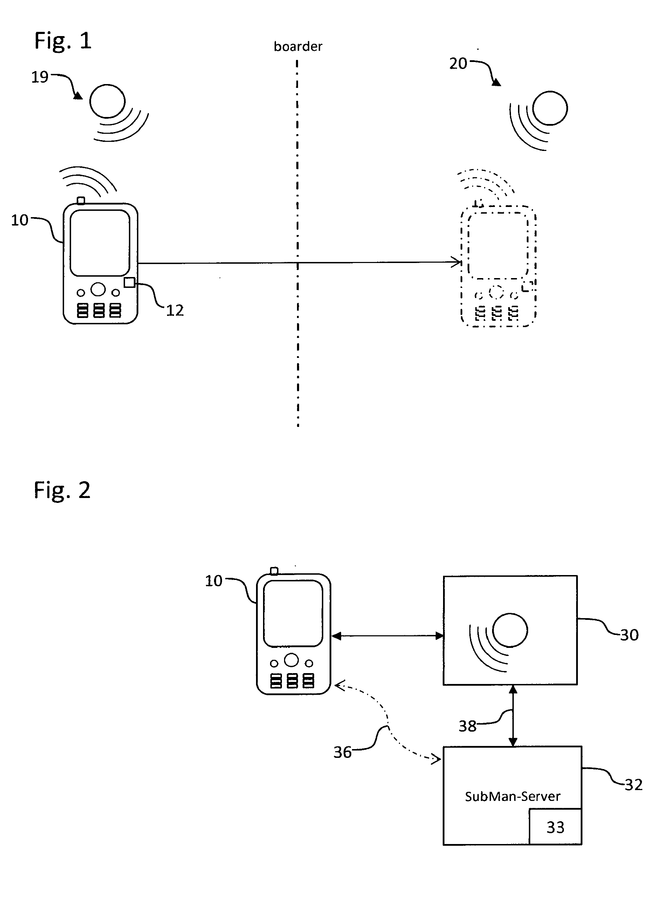

The following is a detailed description of exemplary embodiments of the invention with reference to Figs. 1-3.

Fig. 1 shows a mobile equipment 10, wherein, in the sense of invention, a mobile equipment 10 can be a mobile phone, a tablet PC, a wearable etc. The mobile equipment 10 is provided with a secure element 12. As already mentioned above, the secure element is also known as a subscriber identity module (SIM) and may be in the form of a smart card. Alternatively, the secure element 12 may be permanently embedded in the mobile equipment 10. An embedded secure element 12 is also known as an eUICC (embedded universal integrated circuit card).

As already mentioned above, the mobile equipment 10 is in communication with a mobile network 19, 20. The mobile network 19, 20 can be used to provide voice, text and data services. A subscription, installed on the mobile equipment, in particular the secure element 12, defines the communication rules between the mobile network 19 and the mobile equipment 10.

On the secure element 12 a plurality of subscriptions may be present. Currently, only one subscription may be active on the mobile equipment 10. However, it is foreseeable that there may also be a mobile equipment 10 which is able to handle several active subscriptions.

If the mobile network 19 is not available at the location, at which the mobile equipment 10 is located, the mobile equipment 10 has to switch to a different mobile network 20. For instance, such a switching may be necessary whenever the mobile equipment 10 is moved across a boarder from one country to another country (Fig. 1).

According to the invention, when the mobile equipment 10 detects a different mobile network 20, the mobile equipment 10 determines whether there is a subscription available on the secure element 12 that can be used in the different mobile network of a different mobile network operator 30. The different mobile network 20 and/or the different mobile network operator 30 is any network and/or operator that is different in comparison to the network/ operator to which the mobile equipment 10 was connected before.

If the mobile equipment 10, in particular the secure element 12, is not provided with the latest subscription of the detected different mobile network 20, a first wireless connection 36 is established between the mobile equipment 10, in particular the secure element 12, and a subscription management server 32. As indicated in Fig. 2, the first wireless connection 36 can be a direct connection between the mobile terminal 10 and the subscription management server using, for instance, wifi (wireless LAN) or the first wireless connection 36 can be routed through the mobile network 20 of the mobile network operator 30, for instance using roaming mode of the mobile equipment 10.

Once the first wireless connection 36 has been established, the mobile equipment 10 and/or the secure element 12 informs the subscription management server 32 of the different detected mobile network 20. The information may also comprise the location (i.e. the country) of the detected mobile network 20.

Once the subscription management server 32 has been informed of the detected mobile network 20, a second connection 38 is established between the subscription management server 32 and the mobile network operator. If the detected different network 20 requires a different subscription on the mobile equipment 10, in particular the secure element 12, the different subscription is provided to a download address 33. The decision, whether the detected different network 20 requires a different subscription is made by the mobile network operator 30. Alternatively, the subscription management server 32 can also be configured to determine whether the mobile equipment 10 and/ or the secure element 12 is provided with the latest subscription for the "new"/ different mobile network 20.

The download address 33, to which the different subscription is provided (uploaded) can be any address, for instance a http/https, etc. address, as long as the mobile equipment 10 can download the subscription onto the mobile equipment 10 and/or the secure element 12 from said download address 33. In a preferred configuration, the download address is associated to the subscription management server.

According to the invention, after the first connection 36 between the mobile equipment 10, in particular the secure element 12, and the subscription management server 32 has been established, the mobile equipment 10, in particular the secure element 12 polls the download address 33, if the different subscription is available for download. In this way, the mobile equipment 10, in particular the secure element 12, is provided with an efficient way of determining whether a new subscription is available. In particular, if the mobile equipment 10, in particular the secure element 12, is provided with a plurality of subscriptions, the subscription management server 32 is not certain which subscription is currently active and would need to contact every subscription individually, in order to find out which subscription the subscription management server 32 would have to contact. This drawback of the prior art is solved by the invention, in particular by the mobile terminal 10 and/or the secure element 12 actively contacting the subscription management server and afterwards continuously polling the subscription management server 32, if the new/ different subscription is available for download.

The first wireless connection 36 between the mobile equipment 10 and the subscription management server 32 may employ a mobile network, for instance GSM, HSDPA, LTE etc. and/or a wireless network, for instance a wifi-network.

Prior to polling, the secure element 12 and/or the mobile equipment 10 waits for a predetermined amount of time, for instance 1 sec., 20 sec., 10 sec. etc. The duration of the waiting time can be configured during the setup phase of the first wireless connection 36. After having waited the predetermined amount of time, the secure element 12 and/or the mobile equipment 10 polls the download address 33 for a predetermined amount of times, for instance 5 times, 10 times, 15 times, etc.

As already indicated, the mobile network operator 30 may upload the different subscription/ new subscription to the download address 33.

If the available space on the secure element 12 is not sufficient to store further subscriptions, at least one of the available subscriptions on the secure element may be deleted prior to downloading a "new" subscription.

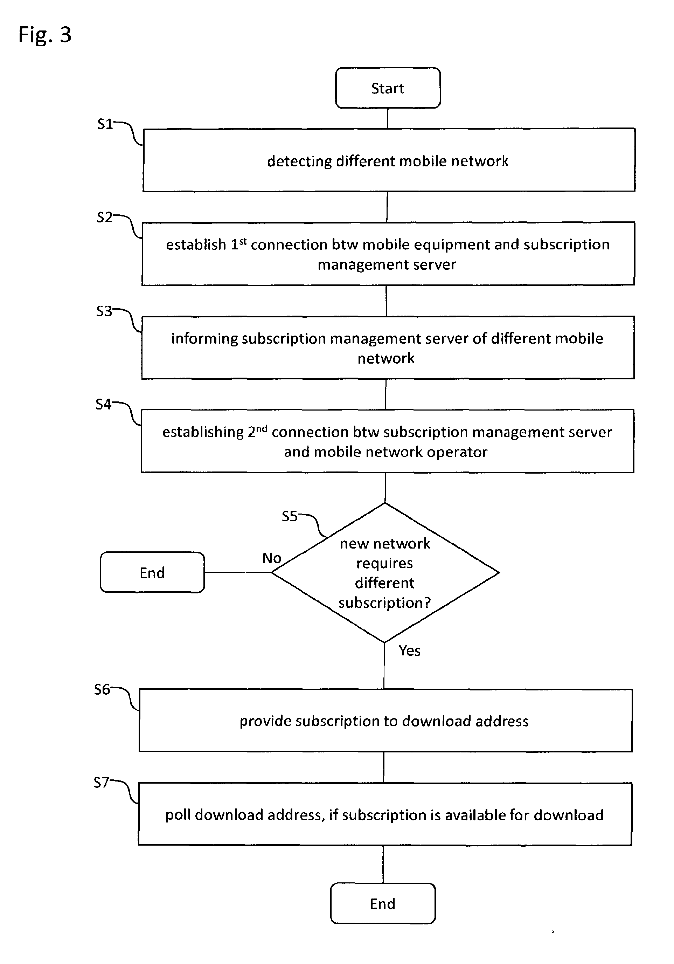

Fig. 3 shows a flowchart of an embodiment of the invention. According to a first step S1, the mobile terminal 10 detects a different mobile network in comparison to the network with which it is connected. Then, in a next step S2, a first connection between the mobile equipment 10 and a subscription management server 33 is established. The subscription management server 33 is informed of the different mobile network 20, of step S3. Afterwards (step S4), a second connection 38 between the subscription management server 33 and a mobile network operator 30 is established, in order to find out if the new/different network requires a different subscription (step S5). If the different network 20 does not require a different subscription, the method ends. If the different network requires a different subscription, the subscription is provided to a download address 33 in step S6. Until the subscription is available for download, the mobile equipment 10 and/ or the secure element 12 polls the download address 33 (step S7).

## Claims

1. Method for providing a subscription to a secure element (12) of a mobile equipment (10), comprising:
- detecting a different mobile network (20) with the mobile equipment (10), in particular the mobile network (20) of a different mobile network operator (30),
- establishing a first wireless connection (36) between the mobile equipment (10), in particular the secure element (12), and a subscription management server (32),
- informing the subscription management server (32) of the different detected mobile network (20),
- establishing a second connection (38) between the subscription management server (32) and the mobile network operator (30),
- if the detected different network (20) requires a different subscription on the mobile equipment (10), in particular the secure element (12),
- providing the different subscription to a download address (33), and
- downloading the subscription to the mobile equipment (10), in particular the secure element (12),
**characterized in that**,
after having established the first connection (36) between the mobile equipment (10), in particular the secure element (12), and the subscription management server (32), the mobile equipment (10), in particular the secure element (12), polls the download address (33), if the different subscription is available for download.

2. Method according to claim 1, **characterized in that** the different mobile network (20) is a roaming network.

3. Method according to claim 1 or 2, **characterized in that** the first wireless connection (36) between the mobile equipment (10) and the subscription management server (32) employs a mobile network and/ or a wifi-network.

4. Method according to one of the preceding claims, **characterized in that** the download address (33) is an address associated with the subscription management server (32).

5. Method according to one of the preceding claims, **characterized in that** the secure element (12) waits for a predetermined amount of time until it starts polling the download address (33).

6. Method according to one of the preceding claims, **characterized in that** the secure element (12) polls the download address (33) for a predetermined amount of times.

7. Method according to one of the preceding claims, **characterized in that** the mobile network operator (30) uploads the different subscription to the download address (33).

8. Method according to one of the preceding claims, **characterized in that** a plurality of subscriptions is available on the mobile equipment (10), in particular the secure element (12).

9. Method according to claim 8, **characterized in that** the step of downloading may also comprise deleting at least one of the subscriptions installed on the secure element (12).

10. Method according to one of the preceding claims, **characterized in that** the different mobile network (20) is a network, for which a current subscription is not available on the secure element (12).

11. System comprising a subscription management server (32), a mobile network operator (30), and a mobile terminal (10), in particular a mobile terminal (10) with a secure element (12), wherein the mobile terminal (10), in particular the secure element (12), is provided with a different subscription according to the method of one of the preceding claims.
